Europäisches Patentamt

European Patent Office

Office européen des brevets

(19)

(11) Veröffentlichungsnummer: **0 018 005**
**B1**

(12)

# EUROPÄISCHE PATENTSCHRIFT

(45) Veröffentlichungstag der Patentschrift:
**17.02.82**

(51) Int. Cl.³: **F 21 S  3/14,** F 16 B  7/00

(21) Anmeldenummer: **80102113.0**

(22) Anmeldetag: **18.04.80**

(54)  **Bausatz zur Herstellung von Raumfachwerken.**

(30) Priorität: **19.04.79  DE 2915778**

(43) Veröffentlichungstag der Anmeldung:
**29.10.80 Patentblatt 80/22**

(45) Bekanntmachung des Hinweises auf die Patenterteilung:
**17.02.82 Patentblatt 82/7**

(84) Benannte Vertragsstaaten:
**AT BE CH FR GB IT LI LU NL SE**

(56) Entgegenhaltungen:
**DE-A-2 556 813**
**US-A-2 408 547**

(73) Patentinhaber: **Kotzolt, Günter, Lagesche Strasse 72-74,
D-4920 Lemgo 1 (DE)**

(72) Erfinder: **Kotzolt, Günter, Lagesche Strasse 72-74,
D-4920 Lemgo 1 (DE)**

(74) Vertreter: **Ter Meer-Müller-Steinmeister Patentanwälte,
Triftstrasse 4, D-8000 München 22 (DE)**

Bausatz zur Herstellung von Raumfachwerken

Die Erfindung betrifft einen Bausatz zur Herstellung von Raumfachwerken, insbesondere Lichtrohrsystemen, mit wenigstens einem Rohr, das entlang achsparallelen Mantellinien in zwei miteinander verrastbare Rohrschalen unterteilt ist, deren eine an den Stirnseiten mit Abschlußflanschen verbunden ist, und mit wenigstens einem Verbindungsstück mit wenigstens einer Anlagefläche für Abschlußflansche der Rohrschalen.

Ein derartiger Bausatz ist aus der DE-A-2 556 813 bekannt. Bei dem bekannten System wird jeweils der Abschlußflansch einer oberen Rohrschale gegen ein Verbindungsstück, beispielsweise einen Knotenpunkt, geführt, und sodann wird eine Hülse durch eine Bohrung im Inneren des Abschlußflansches in eine entsprechende Bohrung des Verbindungsstücks vom Rohrinneren her eingeschoben und durch einen Bajonettverschluß od. dgl. verriegelt. Zur Montage der Hülse ist eine gewisse Längsverschiebung innerhalb der oberen Rohrschale erforderlich, so daß der Innenraum der oberen Rohrschale nicht vollständig zur Aufnahme von Beleuch- tungskörpern und deren Zusatzaggregaten ge- nutzt werden kann. Da der Abschlußflansch und das Verbindungsstück mit einer Art von Kupplungsklauen ineinandergreifen, müssen sie bei der Demontage leicht in Axialrichtung auseinandergeschoben werden. Dies ist oft nicht möglich, sofern es sich um ein größeres, fest montiertes Lichtrohrsystem od. dgl. handelt.

Der Erfindung liegt die Aufgabe zugrunde, einen Bausatz zur Herstellung von Raumfachwerken gemäß dem Gattungsbegriff derart auszubilden, daß für die Montage und Demontage des Systems keinerlei Eingriff in das Innere der Rohrschalen erforderlich ist und die Montage und Demontage ausschließlich radiale Verschiebungen der Rohrschalen in bezug auf die Verbindungsstücke erfordert.

Diese Aufgabe wird erfindungsgemäß bei einem Bausatz des Gattungsbegriffes dadurch gelöst, daß der Abschlußflansch einseitig offen und im wesentlichen hufeisenförmig ausgebildet ist, daß im Inneren der ringförmigen Anlagefläche des Verbindungsstücks ein vorspringender, von dem Abschlußflansch zu umgreifender Rohransatz vorgesehen ist, und daß ein bogenförmiger Verschlußflansch vorgesehen ist, der mit dem Abschlußflansch um den Rohransatz herum zusammenfügbar und verrastbar ist.

Durch die Unterteilung des geschlossenen, ringförmigen Abschlußflansches der bekannten Lösung in zwei zusammenfügbare und verrastbare Einzelteile ergibt sich die Möglichkeit einer Montage und Demontage von Rohren und Verbindungsstücken, ohne daß axiale Verschiebebewegungen erforderlich sind. Das Innere der oberen Rohrschale muß für Montagezwecke nicht frei zugänglich sein, da die Rohrschale mit dem Abschlußflansch lediglich seitlich oder radial auf den Rohransatz aufgeschoben wird. Anschließend wird der Verschlußflansch eingeschoben und mit dem Abschlußflansch verrastet, so daß sich insgesamt wieder ein ringförmiger Flansch ergibt, der zu einer glatten Oberfläche führt. Auf den Verschlußflansch kann die untere Rohrschale aufgesetzt und dabei mit der oberen Rohrschale verrastet werden.

Die Montage der einzelnen Teile erfolgt lediglich durch Zusammenstecken, so daß keinerlei Werkzeug erforderlich ist.

Ein wesentliches Teil, das an allen Verbindungsstücken vorgesehen ist, ist der Rohransatz, der von dem Abschluß- und Verschlußflansch umgriffen wird. Der Rohransatz weist vorzugsweise an seinem freien Rand einen nach außen vorspringenden Flansch auf, hinter dem sich bogenförmige Stege abstützen, die von dem Abschluß- und Verschlußflansch ausgehen. Dadurch ergibt sich eine zugfeste Verbindung zwischen dem Verbindungsstück und einem angrenzenden Rohr.

Der Abschluß- und der Verschlußflansch weisen korrespondierende Formen auf, so daß sie glatt zusammensteckbar sind und dabei eine kreisrunde Außenform ergeben. Die Verrastung des Verschlußflansches kann beispielsweise mit Hilfe einer an dem Verschlußflansch angebrachten, mit zwei freien Schenkeln versehenen Blattfeder erfolgen, die sich in einer geeigneten Innenprofilierung der oberen Rohrschale verhakt.

Die Bezeichnung obere und untere Rohrschale bezieht sich auf die überwiegend verwendete Betriebsstellung und die Darstellung in der Zeichnung. Diese Rohrschalen können jedoch auch in anderen Positionen zueinander angeordnet sein, da die Einheit aus Abschluß- und Verschlußflansch um den Rohransatz frei drehbar ist. Gegebenenfalls ist ein Anschlag vorgesehen, der die Drehung auf einen Winkel von etwa 360° begrenzt, damit ein Abdrehen von im Inneren der Rohre und Verbindungsstücke geführten Versorgungsleitungen verhindert wird.

Verbindungsstücke können in der Form von Knotenpunkten, beispielsweise mit sechs Rohr- ansätzen, Eckstücken, Rohrbogen oder einzel- nen Stoßverbindungen vorgesehen sein. Freie Rohransätze können durch geeignete Abdeckkappen abgedeckt werden.

Weitere Merkmale der Erfindung ergeben sich aus den Unteransprüchen.

Im folgenden werden bevorzugte Ausführungsbeispiele der Erfindung anhand der beigefügten Zeichnung näher erläutert.

Fig. 1 zeigt einen vergrößerten Querschnitt durch ein aus zwei Rohrschalen zusammengesetztes Rohr;

Fig. 2 ist eine Draufsicht auf einen Abschlußflansch;

Fig. 3 zeigt eine entsprechende Seitenansicht;

Fig. 4 ist eine Draufsicht auf einen Verschlußflansch;

Fig. 5 ist ein senkrechter Schnitt zu Fig. 4;

Fig. 6 zeigt ein Verbindungsstück in der Form eines Knotenpunktes;

Fig. 7 veranschaulicht einen Schnitt durch die Zusammenfügung zwischen einem Verbindungsstück und einem Rohr;

Fig. 8 zeigt ein Verbindungsstück in der Form eines Eckstückes;

Fig. 9 zeigt einen Schnitt durch ein Verbindungsstück in der Form einer Rohrkupplung für Stoßverbindungen;

Fig. 10 zeigt eine Draufsicht auf die untere Schale eines zweischaligen Verbindungsstücks in der Form eines Bogens;

Fig. 11 ist eine Draufsicht auf eine Endkappe für ein Rohr;

Fig. 12 zeigt einen entsprechenden senkrechten Schnitt;

Fig. 13 zeigt eine Draufsicht auf eine Abdeckkappe für Verbindungsstücke;

Fig. 14 ist ein entsprechender senkrechter Schnitt;

Fig. 15 zeigt eine weitere Ausführungsform einer Abdeckkappe;

Fig. 16 ist ein zugehöriger Schnitt;

Fig. 17 zeigt einen Schnitt durch eine Wand- oder Deckenbefestigung;

Fig. 18 ist eine Draufsicht auf eine zugehörige Befestigungsplatte;

Fig. 19 ist ein entsprechender Schnitt.

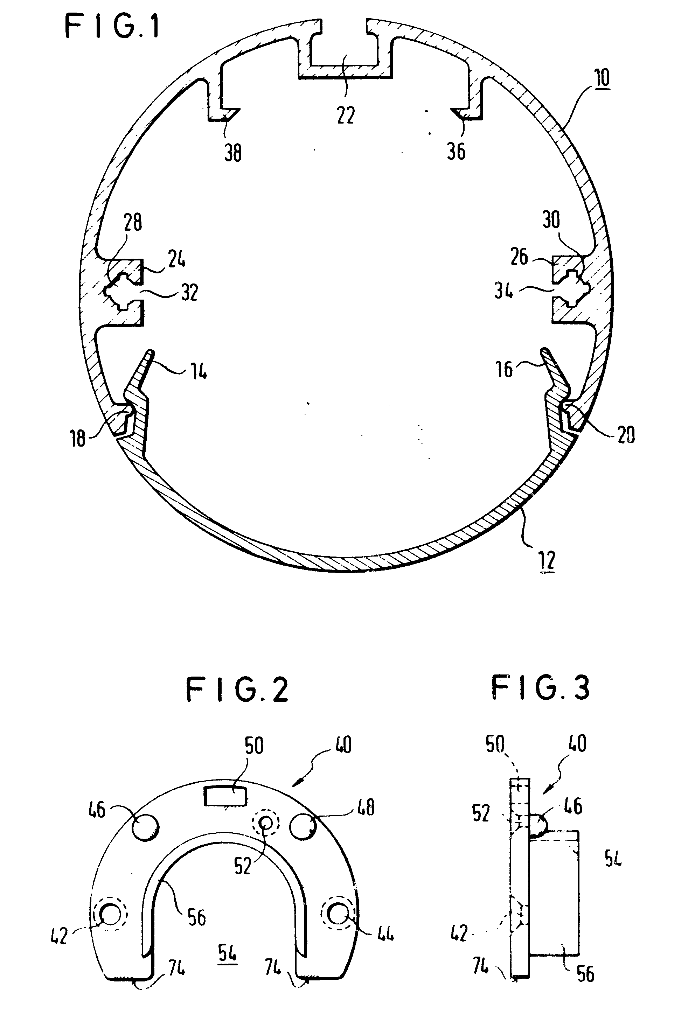

Das in Fig. 1 in vergrößertem Querschnitt gezeigte Rohr ist zusammengesetzt aus einer oberen Rohrschale 10 und einer unteren Rohrschale 12, durch die das zylindrische Rohr, im Querschnitt betrachtet, in Mantellinien etwa im Verhältnis von zwei Drittel zu ein Drittel geteilt wird. Die Rohrschalen 10, 12 sind Strangprofile aus Metall oder Kunststoff mit einer insgesamt zylindrischen Oberfläche. Die untere Rohrschale 12 weist an ihren Längskanten federnde Klemmleisten 14, 16 auf, die federnd über Klemmwülste 18, 20 an den Längskanten der oberen Rohrschale 10 hinweggreifen, so daß sich eine feste, jedoch lösbare Verbindung ergibt.

In bestimmten Anwendungsfällen können die Rohrschalen in anderen Positionen liegen, als sie in Fig. 1 gezeigt sind, so daß die Kennzeichnung als obere und untere Rohrschale lediglich zur Erläuterung dienen soll.

Die obere Rohrschale 10 weist in der oberen Scheitellinie eine hinterschnittene, in das Innere der Rohrschale eintretende Kammer 22 auf, in die beispielsweise nicht gezeigte Metalleisten mit Gewindebohrungen zur Bildung von Aufhängungspunkten eingeschoben werden können. Weiterhin befinden sich rechts und links in Fig. 1 auf den einander gegenüberliegenden Innenseiten der oberen Rohrschale 10 im Querschnitt im wesentlichen rechteckige Ansatzleisten 24, 26, in denen achsparallele Kanäle 28, 30 mit im wesentlichem kreisförmigem Querschnitt verlaufen, die über Schlitze 32, 34 in Richtung der Mittelachse des Rohres offen sind. Weitere Ansatzleisten 36, 38 mit hakenförmigem Querschnitt befinden sich an beiden Seiten der Kammer 22.

Da die Rohrschalen 10, 12 als Endlosprofil hergestellt werden können, können sie in jeder beliebigen Länge zurechtgeschnitten werden. Die untere Rohrschale 12 kann ganz oder teilweise fortgelassen werden, sofern im Inneren der oberen Rohrschale 10 Leuchtstoffröhren, Stromschienen oder dgl. untergebracht werden.

Wenn die obere Rohrschale 10 auf Länge geschnitten worden ist, wird an beiden Stirnseiten ein Abschlußflansch 40 gemäß Fig. 2 und 3 befestigt, der die Form eines einseitig offenen Ringes oder Hufeisens aufweist. Der Abschlußflansch weist auf der rechten und linken Seite in Fig. 2 Senkbohrungen 42, 44 auf, die zur Aufnahme von nicht gezeigten Schrauben dienen, die in die Kanäle 28, 30 der oberen Rohrschale 10 eingeschraubt werden können. Zweckmäßigerweise werden selbstschneidende Schrauben verwendet. Führungszapfen 46, 48, die von dem Abschlußflansch 40 im oberen Bereich rechts und links in Fig. 2 vorspringen, greift in die zwischen der Außenwand der oberen Rohrschale 10 und den Ansatzleisten 36, 38 gebildeten Winkel und dienen zur weiteren Arretierung. Ein Fenster 50 im oberen Mittelbereich des Abschlußflansches 40 liegt in der montierten Stellung in Verlängerung der Kammer 22 und dient somit zur Aufnahme der erwähnten, nicht gezeigten Metalleiste oder dgl. Eine weitere Senkbohrung 52 in dem Abschlußflansch nimmt einen nicht gezeigten Kunststoffzapfen auf, auf den später noch einmal eingegangen werden soll.

Die innere, U-förmige Ausnehmung 54 des Abschlußflansches wird durch einen aufragenden Steg 56 umgeben, der am inneren Rand des Abschlußflansches verläuft. Der Abschlußflansch 40 wird an der oberen Rohrschale 10 derart montiert, daß der Steg 56 in das Innere der Rohrschale hineinragt.

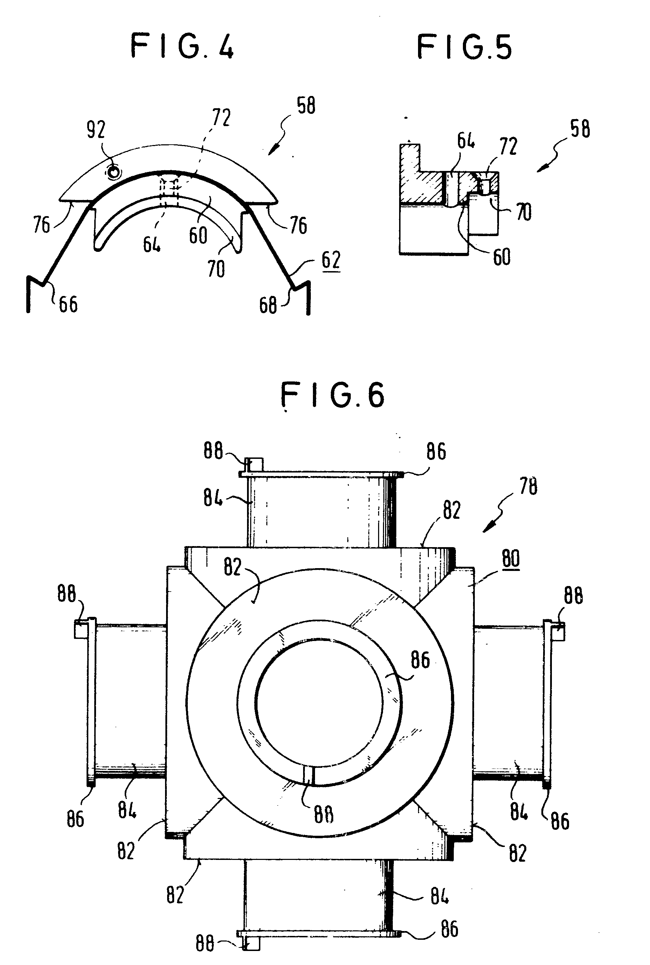

Zur Ergänzung des Abschlußflansches 40 zu einer geschlossenen Ringform ist ein bogenförmiger Verschlußflansch 58 gemäß Fig. 4 und 5 vorgesehen, dessen Außenradius demjenigen des Abschlußflansches 40 entspricht. Der Verschlußflansch 58 weist an seinem bogeninnenseitigen Rand einen vorspringenden Steg 60 auf, dessen Innenradius dem Innenradius des Steges 56 des Abschlußflansches 40 entspricht. Auf der Bogenaußenseite des Steges 60 ist eine entsprechend gebogene Blattfeder 62 mit Hilfe einer nicht gezeigten selbstschneidenden, in eine Bohrung 64 einzudrehenden Schraube befestigt. Die Blattfeder 62 weist an ihren beiden freien Enden doppelt abgewinkelte Haken 66 und 68 auf, auf die später noch einmal eingegangen werden soll.

Aus Fig. 5 geht hervor, daß der Steg 60 entlang seinem freien Rand auf der Bogeninnenseite einen Einstich oder eine Ausnehmung 70 aufweist. Im Bereich der Ausnehmung 70 wird der Steg 60 von einer Senkbohrung 72 durchsetzt, in die ein nicht gezeigter Anschlagstift eingefügt wird, auf den später noch einmal eingegangen werden soll.

Der Abschlußflansch 40 und der Verschlußflansch 58 sind in ihren Abmessungen derart aufeinander abgestimmt, daß sie einen geschlossenen Ring ergeben. Im zusammengesetzten Zustand liegen die in Fig. 2 unteren Stirnflächen 74 des Abschlußflansches 58 an, während der Steg 60 des Verschlußflansches zwischen die Schenkel des U-förmigen Steges 56 des Abschlußflansches derart eintritt, daß ein im wesentlichen kreisförmiger freier Innenraum gebildet wird.

Während der Abschlußflansch 40 fest mit der oberen Rohrschale 10 verbunden werden kann, stellt der Verschlußflansch 58 ein getrenntes Montageteil dar, das mit der unteren Rohrschale 12 nicht fest verbunden ist, sondern diese lediglich in dem Winkel zwischen Steg 60 und Flanschbogen abstützt, wie es später näher erläutert werden soll.

Fig. 6 zeigt als Beispiel eines Verbindungsstücks für einzelne Rohre einen Knotenpunkt 78 mit einem würfelförmigen oder im wesentlichen kugelförmigen Grundkörper 80, auf dem sich sechs ringförmige, jeweils im Winkel von 90° zueinander liegende Anlageflächen 82 befinden, die Anschlußmöglichkeiten für sechs Rohre bilden, wie es in einem räumlichen Fachwerk notwendig sein kann. Der Knotenpunkt 78 ist als Hohlkörper ausgebildet, so daß Versorgungsleitungen, insbesondere Stromleitungen durch den Knotenpunkt hindurch in das Innere der einzelnen Rohre geführt werden können. Vom inneren Rand der Auflageflächen 82 springen Rohransätze 84 vor, die im Inneren ebenfalls hohl sind und somit eine offene Verbindung zum Inneren des Grundkörpers 80 schaffen. Die Rohransätze 84 weisen an ihrem freien Rand umlaufende Flansche 86 auf, auf denen jeweils ein Anschlag 88 vorgesehen ist, auf dessen Funktion später eingegangen werden soll.

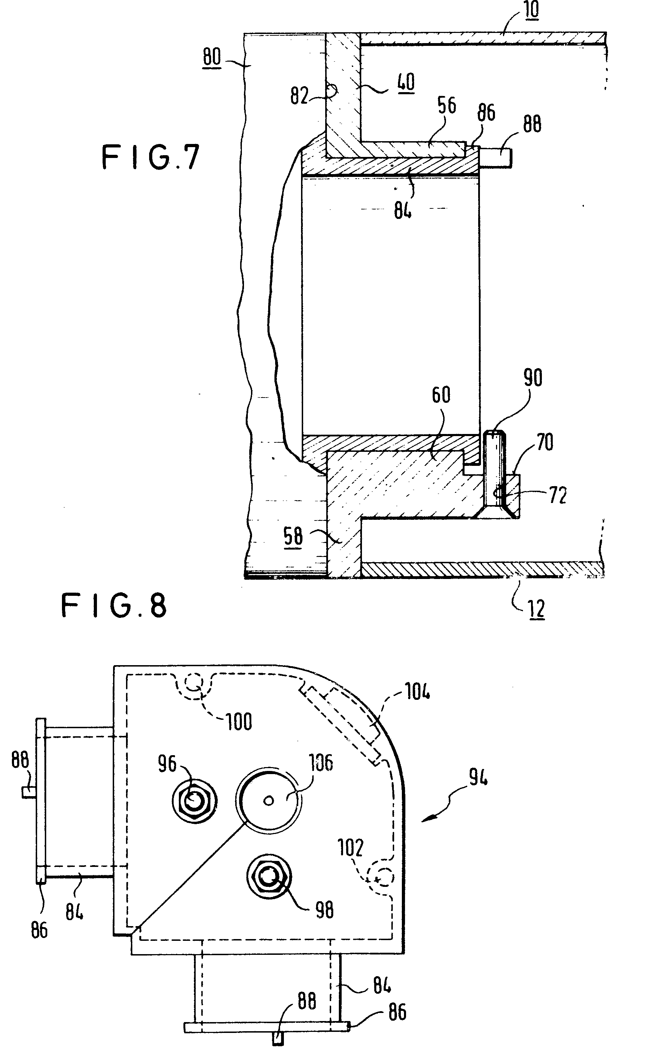

Das Zusammenwirken eines Verbindungsstücks, wie etwa des Knotenpunktes 78 gemäß Fig. 6, der Rohrschalen der Fig. 1 und der Flansche der Fig. 2 und 4 ist in Fig. 7 in einem Längsschnitt veranschaulicht. Die einzelnen Teile der Fig. 7 tragen dieselben Bezugsziffern wie in Fig. 1 bis 6.

Von einem auf der linken Seite in Fig. 7 nur angedeuteten Verbindungsstück, etwa einem Knotenpunkt 78, geht ein Rohransatz 84 aus, an dessen äußerem Ende sich ein umlaufender Flansch 86 befindet. Auf dem Flansch 86 ist ein Anschlag 88 vorgesehen. Bei der Verbindung dieses Verbindungsstücks mit einem Rohr wird zunächst die obere Rohrschale 10 mit dem an dieser angebrachten Abschlußflansch 40 gegen die Anlagefläche 82 des Grundkörpers 80 geführt und sodann in Richtung der Mittelachse der Rohrschale 10 verschoben, bis der Steg 56 des Abschlußflansches hinter den Flansch 86 des Rohransatzes 84 greift. In dieser Stellung ergibt sich eine glatte, durchgehende Außenfläche der Anordnung aus Verbindungsstück und Rohrschale.

Sodann wird der Verschlußflansch 58 von der entgegengesetzten, also der unteren Seite in Fig. 7 gegen den Rohransatz 84 geschoben, wobei der Steg 60 hinter den Flansch 86 des Rohransatzes 84 greift, den Flansch 86 jedoch im Bereich der Ausnehmung 70 des Verschlußflansches übergreift, wie es aus Fig. 7 hervorgeht. Dabei tritt die Blattfeder 62 des Verschlußflansches 58 in das Innere der oberen Rohrschale 10 ein, wobei die Haken 66, 68 der Blattfeder in einer geeigneten Position, etwa hinter den Ansatzleisten 24, 26 verrastet werden. Durch Zusammendrücken der Schenkel der Blattfeder 62 kann diese Rastverbindung wieder gelöst werden. Sofern ein geschlossenes Rohr verwendet werden soll, wird anschließend die untere Rohrschale 12 in der in Fig. 1 gezeigten Weise gegen die obere Rohrschale 10 gedrückt, wobei sie zugleich den Steg 60 des Verschlußflansches abdeckt.

Auf diese Weise entsteht eine zuverlässige und ohne jegliches Werkzeug herstellbare und lösbare Verbindung zwischen dem Verbindungsstück und dem Rohr, die zudem noch den Vorteil hat, daß das Rohr um den Rohransatz 84 des Verbindungsstücks frei drehbar ist, so daß beliebige Winkeleinstellungen des Rohres möglich sind. Um ein übermäßiges Drehen und damit etwa ein Abquetschen von in dem Verbindungsstück und dem Rohr geführten Kabeln zu verhindern, befindet sich auf dem Flansch 86 des Rohransatzes 84 der bereits erwähnte Anschlag 88, der mit dem in Zusammenhang mit Fig. 5 erwähnten, in Fig. 7 andeutungsweise gezeigten Anschlagzapfen 90 in der Bohrung 72 des Verschlußflansches zusammenwirkt.

Sofern eine allzu leichtgängige Drehung des Rohres in Bezug auf das Verbindungsstück verhindert werden soll, die beispielsweise störend sein kann, wenn an dem Rohr zusätzliche Beleuchtungskörper mit seitlich in Bezug auf die Rohrachse versetztem Schwerpunkt aufgehängt sind, kann ein in die Senkbohrung 52 gemäß Fig. 2 eingesetzter, leicht herausragender Kunststoffzapfen vorgesehen sein, der durch Reibung an der Anlagefläche 82 eine Bremswirkung ausübt. Aus dem gleichen Grunde ist gemäß Fig. 4 in dem Verschlußflansch 58 eine Gewindebohrung 92 vorgesehen, die mit Hilfe einer geeigneten Schraube eine Arretierung in jeder beliebigen Winkelstellung ermöglicht.

Die in Fig. 6 gezeigten Rohransätze 84 mit den Flanschen 86 und den Anschlägen 88 stellen ein einheitliches Element aller Verbindungsteile dar, wie im folgenden anhand einiger weiterer Beispiele erläutert werden soll.

Fig. 8 zeigt beispielsweise ein Eckstück 94 mit zwei in einem Winkel von 90° zueinander angeordneten Rohransätzen 84. Wie die gestrichelten Linien andeuten, ist das Eckstück 94 als hohles Teil ausgebildet. Das Eckstück 84 ist aus zwei Schalen zusammengesetzt und mit Hilfe von Schrauben und Muttern 96, 98 zusammenge-

spannt. Gestrichelt angedeutete Justierstifte 100, 102 dienen zur genauen Lagefixierung. Eine gestrichelt angedeutete Kappe 104 kann zur Aufnahme von Zusatzleuchten und dgl. herausgebrochen werden. Eine Bohrung 106 dient zur Aufnahme von nicht gezeigten Aufhängungsorganen.

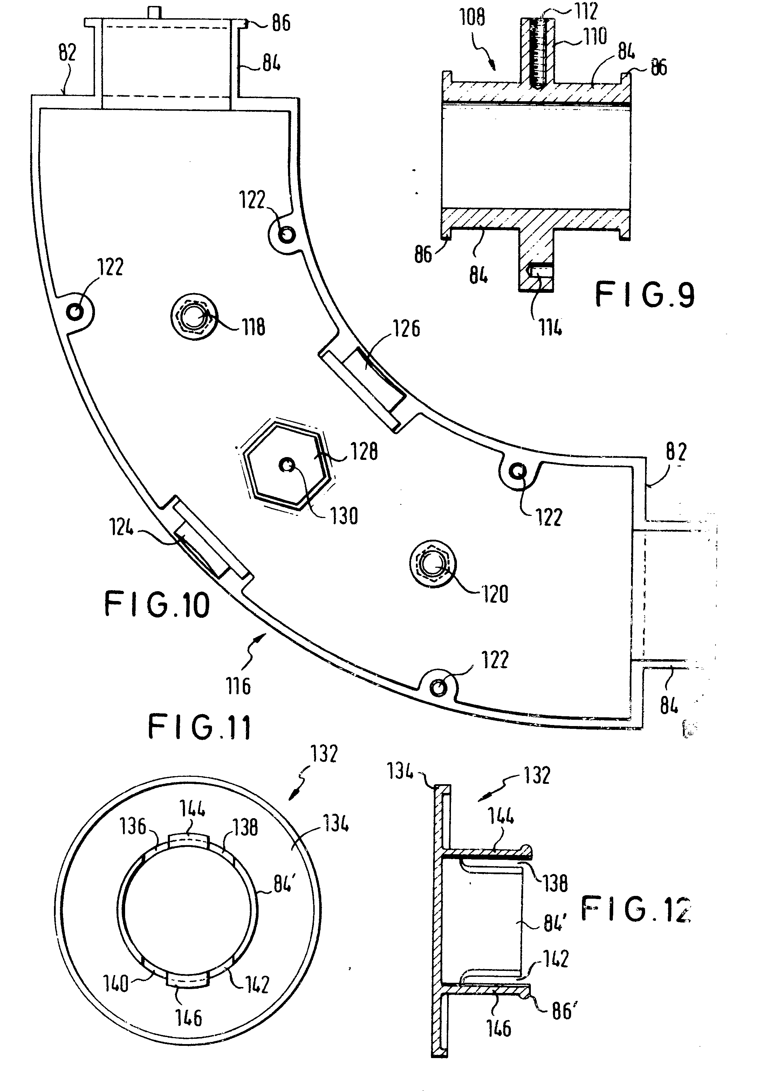

Fig. 9 zeigt ein weiteres Verbindungsstück in der Form einer Rohrkupplung 108 für eine senkrechte Stoßverbindung. Es handelt sich im wesentlichen um eine kreisringförmige Scheibe 110, von deren beiden Seiten wiederum Rohransätze 84 mit Flanschen 86 ausgehen. Sofern die Scheibe nicht als Kreisring, sondern als geschlossene Platte ausgebildet ist und nur auf einer Seite einen Rohransatz 84 trägt, kann ein Verbindungsstück dieser Art als Abschlußplatte oder Deckel für Rohre verwendet werden. Eine radiale Bohrung 112 in der Scheibe dient zur Aufnahme von Aufhängungsorganen. Eine weitere, achsparallele Bohrung 114 in der Scheibe kann ggf. zur Aufnahme einer Feststellschraube verwendet werden, ist jedoch nicht notwendig.

Ein in Fig. 10 gezeigtes Verbindungsstück in der Form eines Rohrbogens 116 dient zur rechtwinkligen Verbindung von zwei nicht gezeigten Rohren in einem größeren Bogen, als es mit einem Eckstück 94 gemäß Fig.8 möglich ist. Auch in diesem Falle sind zwei Rohransätze 84 mit Flanschen 86 vorgesehen. Der Rohrbogen 106 kann aus zwei getrennten Schalen bestehen, die durch Schrauben bzw. Muttern 118, 120 zusammengespannt sind. Weiterhin sind vier Justierstifte 122 mit entsprechenden Bohrungen in der jeweils anderen Schale vorgesehen. Kappen 124, 126 können herausgebrochen werden, sofern zusätzliche Leuchten oder dgl. montiert werden sollen. Eine eingelassene, sechseckige Platte 128 mit einer Gewindebohrung 130 dient zur Aufnahme von Aufhängungsorganen.

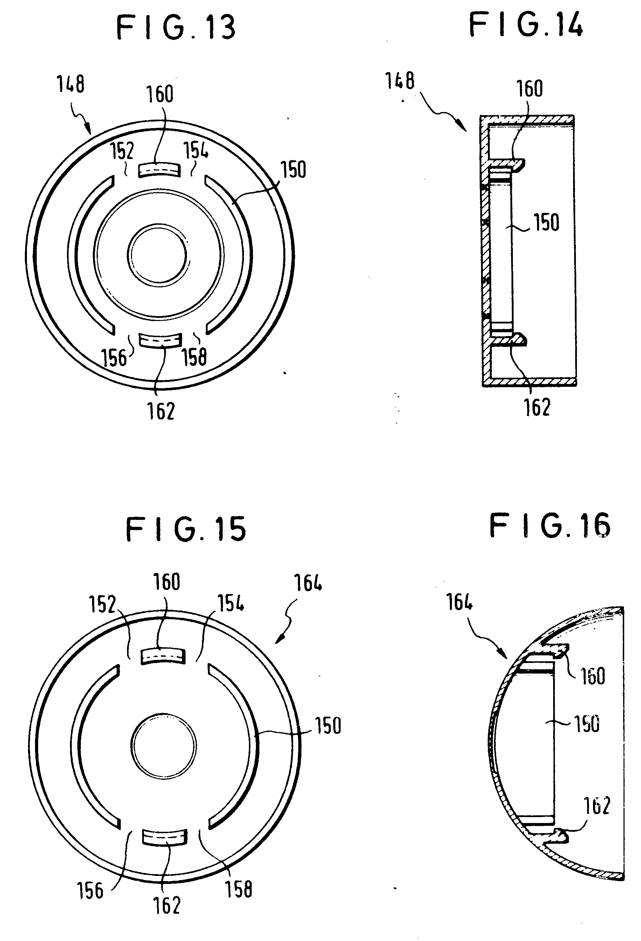

Eine in Fig. 11 und 12 gezeigte Endkappe 132 für Rohre umfaßt eine kreisförmige Platte 134, von deren einer Oberfläche wiederum ein Rohransatz ausgeht, der in diesem Falle mit 84' bezeichnet ist. Dieser Rohransatz unterscheidet sich von dem bisher beschriebenen Rohransatz durch eine Anzahl von achsparallelen Schlitzen 136, 138, 140, 142, durch die der Rohransatz 84' in eine Anzahl von parallelen Zungen unterteilt wird, von denen wenigstens die mit 144 und 146 bezeichneten Zungen einen Flansch-Abschnitt 86 tragen. Die Zungen 144, 146 sind federnd und gestatten das Verrasten der Endkappe im Ende eines in Fig. 11 und 12 nicht gezeigten Rohres bzw. einer Anordnung aus Abschlußflansch 40 und Verschlußflansch 58.

Fig. 13 und 14 zeigen eine Abdeckkappe 148 für Rohransätze von Verbindungsstücken. Am Boden der topfförmigen oder zylindrischen Abdeckkappe befindet sich ein insgesamt kreisförmiger Rohransatz 150, der durch Schlitze 152, 154, 156, 158 in eine Anzahl von bogenförmigen Abschnitten unterteilt ist, von denen zwei Abschnitte als Zungen 160, 162 mit nach innen vorspringenden Haken ausgebildet sind, die über den Flansch 86 der Rohransätze 84 greifen.

Eine weitere Abdeckkappe in der Form einer Halbkugel ist in Fig. 15 und 16 mit 164 bezeichnet. Im Inneren der Halbkugel 164 befindet sich ein Rastmechanismus, der demjenigen der Fig. 13 und 14 entspricht und daher nicht erneut erläutert werden muß.

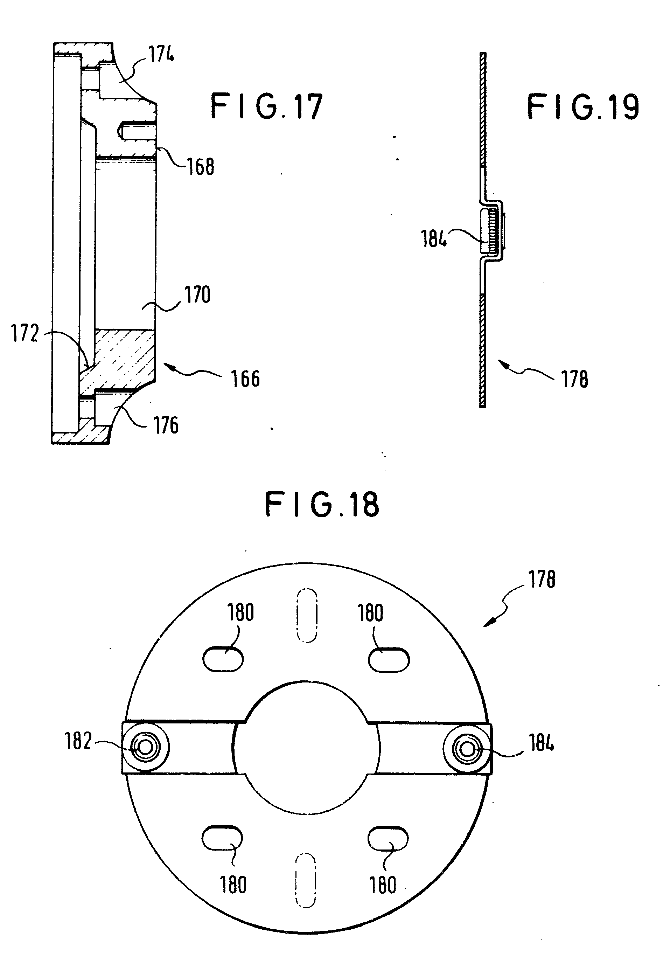

Fig. 17 zeigt einen Schnitt durch ein insgesamt kreisförmiges Endstück 166 zur Wand- oder Deckenbefestigung eines Rohres. Eine ringförmige Anlagefläche 168 entspricht der Anlagefläche der Verbindungsstücke, die beispielsweise für den Knotenpunkt 78 gemäß Fig. 6 mit 82 bezeichnet ist. Im Inneren der Anlagefläche 168 befindet sich eine Bohrung 170 zur Aufnahme des Rohransatzes 84 der Verbindungsstücke. Links in Fig. 17 schließt an die Bohrung 170 ein erweiterter Einstich 172 an, in dem der Flansch 86 eines Rohransatzes 84 beispielsweise mit Hilfe eines Seegerringes festgelegt werden kann. Das Endstück 166 kann mit Hilfe von nicht gezeigten Schrauben, die durch Bohrungen 174, 176 hindurchgeführt werden, auf einer in Fig. 18 und 19 gezeigten Grundplatte 178 befestigt werden, die zuvor an einer Wand oder einer Decke mit Hilfe von nicht gezeigten Schrauben durch Bohrungen 180 hindurch montiert worden ist. Auf der Grundplatte 178 sind zwei sogenannte Börti-Muttern 182, 184 befestigt, die durch die Bohrungen 174, 176 des Endstücks 166 hindurch von Schrauben erfaßt werden können.

## Patentansprüche

1. Bausatz zur Herstellung von Raumfachwerken, insbesondere Lichtrohrsystemen, mit wenigstens einem Rohr, das entlang achsparallelen Mantellinien in zwei miteinander verrastbaren Rohrschalen (10, 12) unterteilt ist, deren eine an den Stirnseiten mit Abschlußflanschen (40) verbunden ist, und mit wenigstens einem Verbindungsstück (78, 94, 108, 116) mit wenigstens einer Anlagefläche für Abschlußflansche der Rohrschalen, dadurch gekennzeichnet, daß der Abschlußflansch (40) einseitig offen und im wesentlichen hufeisenförmig ausgebildet ist, daß im Inneren der ringförmigen Anlagefläche (82) des Verbindungsstücks (78, 94, 108, 116) ein vorspringender, von dem Abschlußflansch (40) zu umgreifender Rohransatz (84) vorgesehen ist, und daß ein bogenförmiger Verschlußflansch (58) vorgesehen ist, der mit dem Abschlußflansch (40) um den Rohransatz (84) herum zusammenfügbar und verrastbar ist.

2. Bausatz nach Anspruch 1, dadurch gekennzeichnet, daß der Rohransatz (84) einen nach außen vorspringenden Flansch (86) am freien Ende aufweist und daß der Abschlußflansch (40) und der Verschlußflansch (58) einen in das Rohr (10, 12) hineinragenden, den Rohransatz umgebenden Steg (56, 60) aufweisen, der den Flansch erfaßt.

3. Bausatz nach Anspruch 1 oder 2, dadurch

gekennzeichnet, daß der Verschlußflansch (58) eine Blattfeder (62) mit zwei freien Schenkeln (66, 68) trägt, die im Inneren des oberen Rohrabschnitts (10), ggf. in einer geeigneten Profilierung (24, 26) der Innenfläche, verrastbar sind.

4. Bausatz nach einem der vorhergehenden Ansprüche, mit einer oberen Rohrschale, die etwa zwei Drittel des Rohrumfangs, und einer unteren Rohrschale, die etwa ein Drittel des Rohrumfangs einnimmt, dadurch gekennzeichnet, daß der Steg (56) des Abschlußflansches (40) die Form eines U mit parallelen Schenkeln aufweist und daß der Steg (60) des Verschlußflansches (58) bogenförmig ist und zwischen diese Schenkel einschiebbar ist.

5. Bausatz nach einem der Ansprüche 2 bis 4, dadurch gekennzeichnet, daß auf der Stirnfläche des Flansches (86) des Rohransatzes (84) ein Anschlag (88) vorgesehen ist, der mit einem den Flansch übergreifenden Anschlag (72) des Abschlußflansches (40) oder Verschlußflansches (58) zusammenwirkt.

6. Bausatz nach einem der vorhergehenden Ansprüche, dadurch gekennzeichnet, daß das Verbindungsstück (78, 94, 108, 116) und der oder die Rohransätze (84) einen zusammenhängenden Hohlkörper darstellen.

7. Bausatz nach einem der vorhergehenden Ansprüche, gekennzeichnet durch ein Verbindungsstück in der Form einer Rohrkupplung (108) zur Stoßverbindung von Rohren (10, 12), die eine kreisringförmige Scheibe (110) und zwei Rohransätze (84) auf gegenüberliegenden Seiten umfaßt.

8. Bausatz nach einem der Ansprüche 1 bis 6, gekennzeichnet durch ein Verbindungsstück in der Form eines Eckstücks (94) mit zwei im Winkel zueinander stehenden Rohransätzen (84).

9. Bausatz nach einem der Ansprüche 1 bis 6, gekennzeichnet durch ein Verbindungsstück in der Form eines Knotenpunkts (78) mit mehreren, insbesondere sechs Rohransätzen (84).

10. Bausatz nach einem der Ansprüche 1 bis 6, gekennzeichnet durch ein Verbindungsstück in der Form eines Rohrbogens (116) mit zwei im Winkel zueinander stehenden Rohransätzen (84).

11. Bausatz nach einem der vorhergehenden Ansprüche, dadurch gekennzeichnet, daß die Rohransätze (84) durch eine ringförmige Anlagefläche (82) umgeben sind.

12. Bausatz nach einem der vorhergehenden Ansprüche, gekennzeichnet durch eine Abdeckkappe (148, 164) zum Abdecken eines freien Rohransatzes (84), die federnde Zungen (160, 162) zum Erfassen des Flansches (86) eines Rohransatzes auf der Innenseite einer topf- oder halbkugelförmigen Schale aufweist.

13. Bausatz nach einem der vorhergehenden Ansprüche, dadurch gekennzeichnet, daß die obere Rohrschale (10) und/oder die Verbindungsstücke (78, 94, 108, 116) Befestigungseinrichtungen (22, 104, 106, 112, 124, 126, 130) für Zusatzaggregate und/oder Aufhängungseinrichtungen aufweisen.

14. Bausatz nach Anspruch 13, dadurch gekennzeichnet, daß die obere Rohrschale (10) im oberen Bereich eine zur oberen Oberfläche offene, hinterschnittene Kammer (22) aufweist, in die eine Leiste einschiebbar ist, die Befestigungseinrichtungen für Aufhängungseinrichtungen aufweist.

## Claims

1. A set of parts for producing three-dimensional arrays, more specially lighting systems with lamp tubes, having at least one tube with a division up into two tube shells (10, 12) along two lines on the tube parallel to its axis, the tube shells being able to be spring-locked together and one of the shells being joined at its ends with end plates (40), and with at least one connection piece (78, 94, 108, 116) with at least one support face for end plates of the tube shells, characterized in that the end plate (40) is open at one side on its edge and is generally in the form of a horseshoe, in that inside the ring-like support face (82) of the connection piece (78, 94, 108, 116) there is an outwardly running tube headpiece (84) about which the end plate (40) may be placed, and in that a curved locking plate (58) is present, which, together with the end plate (40), may be placed round the tube head (84) and springingly locked therewith.

2. A set of parts as claimed in claim 1, characterized in that the tube head (84) has an outwardly running ear (86) at its free end and in that the end plate (40) and the locking plate (58) have a support keeper (56, 60) running into the space within the tube (10, 12) and placed round the tube head, the support keeper (56, 60) taking up the plate.

3. A set of parts as claimed in claim 1 or claim 2, characterized by the locking plate's (58) having a leaf spring (62) with two free fingers (66, 68) for locking in the top tube part (10) and if desired in a part of the inner face which has a special outline (24, 26).

4. A set of parts as claimed in anyone of claims 1 to 3, with a top tube shell taking up about two thirds of the circumference of the outline of the tube, and a lower tube shell taking up about one third thereof, characterized in that the support keeper (56) of the end plate (40) has the form of a letter U with parallel legs and in that the support keeper (60) of the locking plate (58) is in the form of an arc and may be pushed inbetween these legs.

5. A set of parts as claimed in anyone of claims 2 to 4, characterized in that on the end face of the plate (86) of the tube head (84) there is a stop (88) for use with a further stop (72), gripping round the plate, of the end plate (40) or the locking plate (58).

6. A set of parts as claimed in anyone of claims 1 to 5, characterized in that the connection piece (78, 94, 108, 116) and the one or more tube heads (84) take the form of a single-piece hollow body.

7. A set of parts as claimed in anyone of claims 1 to 6, characterized by a connection piece in the form of a tube joining unit (108) for producing end-to-end joins between tubes (10, 12) and which is made up of a ring-like washer (110) and two tube heads (84) on opposite sides.

8. A set of parts as claimed in anyone of claims 1 to 6, characterized by a connection piece in the form of cornerpiece (94) with two tube heads (84) at an angle to each other.

9. A set of parts as claimed in anyone of claims 1 to 6, characterized by a connection piece in the form of a crossover (78) with a number of tube heads and more specially six tube heads (84).

10. A set of parts as claimed in anyone of claims 1 to 6, characterized by a connection piece in the form of a tube elbow (116) with two tube heads (84) at an angle to each other.

11. A set of parts as claimed in anyone of claims 1 to 10, characterized in that the tube heads (84) have a ring-like stop face (82) round them.

12. A set of parts as claimed in anyone of claims 1 to 11, characterized by a covering cup (148, 164) for covering and shutting off a free tube head (84), and the cup has spring tongue pieces (160, 162) for gripping the plate (86) of one tube head on the inner side of a pot-like or half-ball-like shell.

13. A set of parts as claimed in anyone of claims 1 to 12, characterized in that the top tube shell (10) and/or the connection pieces (78, 94, 108, 116) have fixing systems (22, 104, 106, 112, 124, 126, 130) for further parts of the system and/or parts for hanging up the system.

14. A set of parts as claimed in claim 13, characterized in that the top tube shell (10) has in its top part an undercut space (22), open towards the outer top face and into which a rail may be pushed having fixing systems for the hanging up parts.

**Revendications**

1. Structure pour la réalisation de treillis tridimensionnels, en particulier de systèmes de tubes d'éclairage, comprenant au moins un tube qui est divisé le long de génératrices parallèles à l'axe en deux coquilles tubulaires (10, 12) assemblables par encliquetage, dont l'une est reliée aux faces frontales avec des fausses brides (40), et comportant au moins une pièce de liaison (78, 94, 108, 116) avec au moins une surface de contact pour les fausses brides des coquilles tubulaires, caractérisée par le fait que la fausse bride (40) est ouverte d'un côté et est réalisée sensiblement en forme de fer à cheval, qu'à l'intérieur de la surface de contact annulaire (82) de la pièce de liaison (78, 94, 108, 116) est prévu un prolongement tubulaire (84) destiné à être enveloppé par la fausse bride (40) et qu'il est prévu une bride de fermeture (58) arquée qui est susceptible d'être réunie et assemblée par encliquetage avec la fausse bride (40) autour du prolongement tubulaire (84).

2. Structure selon la revendication 1, caractérisée par le fait que le prolongement tubulaire (84) présente à son extrémité libre une bride (86) faisant saillie vers l'extérieur et que la fausse bride (40) et la bride de fermeture (58) présentent une âme (56, 60), pénétrant dans le tube (10, 12), entourant le prolongement tubulaire et couvrant la bride.

3. Structure selon la revendication 1 ou 2, caractérisée par le fait que la bride de fermeture (58) supporte un ressort à lame (62) avec deux ailes libres (66, 68) qui sont susceptibles de s'encliqueter à l'intérieur de la coquille tubulaire supérieure, le cas échéant dans un profil (24, 26) approprié de la surface interne.

4. Structure selon l'une des revendications précédentes, comprenant une coquille tubulaire supérieure qui couvre environ les deux tiers de la périphérie du tube et une coquille tubulaire inférieure qui couvre environ un tiers de la périphérie du tube, caractérisée par le fait que l'âme (56) de la fausse bride (40) présente la forme d'un U avec des branches parallèles et que l'âme (60) de la bride de fermeture (58) est arquée et est susceptible d'être enfoncée entre ces deux branches.

5. Structure selon l'une des revendications 2 à 4, caractérisée par le fait que sur la surface frontale de la bride (86) du prolongement tubulaire (84) est prévue une butée (88) qui coopère avec une butée (72) de la fausse bride (40) ou de la bride de fermeture (58), qui recouvre la bride.

6. Structure selon l'une des revendications précédentes, caractérisée par le fait que la pièce de liaison (78, 94, 108, 116) et le ou les prolongements tubulaires (84) constituent un corps creux d'un seul tenant.

7. Structure selon l'une des revendications précédentes, caractérisée par une pièce de liaison sous la forme d'un raccord tubulaire (108) pour la liaison bout à bout de tubes (10, 12), qui comporte un disque circulaire (110) et deux prolongements tubulaires (84) sur les côtés opposés.

8. Structure selon l'une des revendications 1 à 6, caractérisée par une pièce de liaison sous la forme d'une pièce coudée (94) avec deux prolongements tubulaires (84) formant un angle l'un par rapport à l'autre.

9. Structure selon l'une des revendications 1 à 6, caractérisée par une pièce de liaison sous la forme d'un noeud (78) avec plusieurs, en particulier six, prolongements tubulaires (84).

10. Structure selon l'une des revendications 1 à 6, caractérisée par une pièce de liaison sous la forme d'un coude tubulaire (116) avec deux prolongements tubulaires (84) formant un angle l'un par rapport à l'autre.

11. Structure selon l'une des revendications précédentes, caractérisée par le fait que les prolongements tubulaires (84) sont entourés par une surface d'appui annulaire (82).

12. Structure selon l'une des revendications précédentes, caractérisée par un capuchon de recouvrement (148, 154) pour recouvrir un prolongement tubulaire libre (84), qui présente des languettes élastiques (160, 162) pour le montage de la bride (86) d'un prolongement tubulaire sur le côté intérieur d'une coquille en forme de pot ou de demi-sphère.

13. Structure selon l'une des revendications précédentes, caractérisée par le fait que la coquille tubulaire supérieure (10) et/ou les pièces de liaison (78, 94, 108, 116) présentent des dispositifs de fixation (22, 104, 106, 112, 124, 126, 130) pour des éléments supplémentaires et/ou des dispositifs de suspension.

14. Structure selon la revendication 13, caractérisée par le fait que la coquille tubulaire supérieure (10) présente dans sa partie supérieure une chambre (22) en contre-dépouille, ouverte vers la surface supérieure, dans laquelle est susceptible d'être enfoncée une baguette qui présente des dispositifs de fixation pour des dispositifs de suspension.

0 018 005

FIG.1

FIG.2

FIG.3

9

# FIG.4

# FIG.5

# FIG.6

FIG.7

FIG.8

FIG.9

FIG.10

FIG.11

FIG.12

# FIG.13

# FIG.14

# FIG.15

# FIG.16

FIG.17

174
168
170
172
166
176

FIG.19

184
178

FIG.18

178
180
180
182
184
180
180

19